# EUROPEAN PATENT APPLICATION

(11) **EP 4 362 145 A1**
(43) Date of publication of application: **01.05.2024**
(21) Application number: 22828026.9
(22) Date of filing: 29.03.2022
(51) Int. Cl.: H01M 8/04858, H01M 8/18, H01M 8/249

(54) **REDOX FLOW BATTERY SYSTEM**

(30) Priority: 21.06.2021 JP 2021102299
(71) Applicant: SUMITOMO ELECTRIC INDUSTRIES, LTD., Osaka-shi, Osaka 541-0041 (JP)
(72) Inventor: KAKU Hirokazu, Osaka-shi, Osaka 541-0041 (JP); FUJITA Hayato, Osaka-shi, Osaka 541-0041 (JP); NAITO Yasuhiro, Osaka-shi, Osaka 541-0041 (JP)
(74) Representative: Hoffmann Eitle
(86) International application number: PCT/JP2022/015671
(87) International publication number: WO 2022/270107

(57) **Abstract**

A redox flow battery system includes: a plurality of banks; a power conversion device provided in each of the plurality of banks; and a controller that controls a state of charge of each of the plurality of banks by controlling the power conversion device. In the redox flow battery system, each of the plurality of banks includes a battery cell that performs charging and discharging by a supply of an electrolytic solution, the plurality of banks include: a plurality of first banks controlled to be in a first state of charge; and one or more second banks excluding the first banks, and the controller controls a state of charge of the second bank to be a second state of charge different from the first state of charge.

## Description

### TECHNICAL FIELD

The present disclosure relates to a redox flow battery system.

This application claims priority from Japanese Patent Application No. 2021-102299 filed on June 21, 2021, the contents of which are incorporated herein by reference in their entirety.

### BACKGROUND ART

PTL 1 discloses an operation method of a redox flow battery system that performs charging and discharging by supplying a positive electrolyte and a negative electrolyte to a battery cell. In PTL 1, it is described that a variation in voltage between a plurality of banks is controlled in the redox flow battery system including the banks.

### CITATION LIST

### PATENT LITERATURE

PTL 1: Japanese Patent Laying-Open No. 2006-40648

### SUMMARY OF INVENTION

A redox flow battery system of the present disclosure includes: a plurality of banks; a power conversion device provided in each of the plurality of banks; and a controller that controls a state of charge of each of the plurality of banks by controlling the power conversion device. In the redox flow battery system, each of the plurality of banks includes a battery cell that performs charging and discharging by the supply of an electrolytic solution, the plurality of banks include: a plurality of first banks controlled to be in a first state of charge; and one or more second banks excluding the first banks, and the controller controls a state of charge of the second bank to be a second state of charge different from the first state of charge.

### BRIEF DESCRIPTION OF DRAWINGS

Fig. 1 is a schematic configuration diagram showing a configuration of a redox flow battery system according to an embodiment.
Fig. 2 is a schematic configuration diagram showing a basic configuration of a bank.

### DETAILED DESCRIPTION

### [Problem to be Solved by the Present Disclosure]

It is required to enhance the energy density in a redox flow battery system. When the energy density can be increased, the battery capacity can be enhanced. However, when the energy density is to be increased, a side reaction easily occurs at the time of charging or discharging. There is a possibility that a decrease in the battery performance such as the deterioration of an electrolytic solution is caused by the side reaction.

In general, in a redox flow battery, the usage range of the state of charge (SOC) is limited to suppress the decrease in the battery performance due to a side reaction. The technique described in PTL 1 causes the SOCs of the banks to be as equal as possible by performing voltage control that reduces the difference in voltage between the banks. In the technique described in PTL 1, operation is performed so as to cause the SOCs of all of the banks to be equal within an SOC range in which a side reaction does not occur. Therefore, the usage range of the SOC cannot be expanded.

An object of the present disclosure is to provide a redox flow battery system capable of improving the decrease in battery performance due to a side reaction while being able to realize high energy density.

### [Advantageous Effect of the Present Disclosure]

The redox flow battery system of the present disclosure is capable of improving the decrease in the battery performance due to the side reaction while being able to realize high energy density.

### [Description of Embodiments]

The inventors of the present invention have gained the following insight as a result of intensive research regarding acquisition of high energy density in a redox flow battery and the influence of the acquisition of the high energy density on the battery performance.

One measure to enhance the energy density of the redox flow battery is to expand the usage range of the SOC. However, when the usage range of the SOC is expanded, a side reaction may occur, and the battery performance may be adversely affected.

In general, in the redox flow battery, the SOC is managed to be maintained within a certain range in order to suppress the decrease in the battery performance due to a side reaction. In a region in which the SOC is high or a region in which the SOC is low, an active material ion included in the electrolytic solution may be deposited by the side reaction. When the active material ion is deposited, there is a possibility that the active material ion may not function as an active material. The deposition of the active material ion causes the deterioration of the electrolytic solution and the decrease in the battery capacity. A deposit of the active material ion causes the deterioration of a battery cell by adhering to an electrode constituting the battery cell, for example. As above, when charging or discharging is performed in the region in which the SOC is high or the region in which the SOC is low, a side reaction such as the deposition of an active material ion is facilitated. When the generation amount of a side reaction product such as the deposit of the active material ion increases, the battery performance decreases. Thus, in the related-art redox flow battery, control is commonly performed so as to perform charging and discharging within an SOC range in which a side reaction hardly occurs. In other words, the usage range of the SOC is limited.

The inventors of the present invention have found that it may be possible to dissolute a product generated by a side reaction into the electrolytic solution as an ion again by a reversible reaction. For example, when a deposit of an active material ion is generated by a side reaction in the region in which the SOC is high, it may be possible to cause the deposit to return into an ion again in the region in which the SOC is low. Alternatively, when a deposit of an active material ion is generated by a side reaction in the region in which the SOC is low, it may be possible to cause the deposit to return into an ion again in the region in which the SOC is high. In such case, it becomes possible to redissolve the deposit of the active material ion as an ion by controlling the SOC to be periodically maintained in the region in which the SOC is low or the region in which the SOC is high for a certain amount of time. Therefore, even when a side reaction occurs, it becomes possible to recover the electrolytic solution by redissolving the side reaction product such as the deposit of the active material ion by controlling the SOC. It can be possible to improve the decrease in the battery performance due to a side reaction. However, the control of the SOC for redissolving the side reaction product forcibly controls the SOC into a particular range, and hence cannot perform charging or discharging at the same time. Therefore, the control of the SOC described above needs to be performed when the battery cell is not performing charging and discharging. When the control of the SOC described above is executed, the operation of the redox flow battery is stopped, and hence a restriction occurs in the operation. There is less freedom of operation for a user.

The inventors of the present invention propose shifting the SOCs between the plurality of banks in the redox flow battery system including the banks in order to realize high energy density. In detail, control is not performed so as to cause the SOCs of all of the banks to be equal, and control is performed such that the SOCs of some banks are different.

An embodiment of the present disclosure is listed and described first.
(1) A redox flow battery system according to an embodiment of the present disclosure includes: a plurality of banks; a power conversion device provided in each of the plurality of banks; and a controller that controls a state of charge of each of the plurality of banks by controlling the power conversion device. In the redox flow battery system, each of the plurality of banks includes a battery cell that performs charging and discharging by a supply of an electrolytic solution, the plurality of banks include: a plurality of first banks controlled to be in a first state of charge; and one or more second banks excluding the first banks, and the controller controls a state of charge of the second bank to be a second state of charge different from the first state of charge.

The redox flow battery system of the present disclosure is capable of improving the decrease in the battery characteristics due to the side reaction while being able to realize high energy density. The state of charge of the bank means the state of charge of a battery cell constituting the bank. When there are a plurality of battery cells, the state of charge of the battery cell is an average value of the states of charge of the plurality of battery cells. The state of charge is simply referred to as an "SOC" below.

In the redox flow battery system of the present disclosure, the first bank is a bank that performs charging from a power source such as a power generation facility and performs discharging to a load. The SOC of the first bank fluctuates in accordance with charging and discharging. The SOC of the first bank is controlled to be the first SOC. The first SOC is a particular value within a range obtained by expanding the usage range of a normal SOC. The usage range of the normal SOC is an SOC range in which a side reaction hardly occurs and a side reaction product is hardly generated even when charging and discharging are repeated. The second bank is a bank that performs recovery work of the electrolytic solution such as the redissolution of the side reaction product. The SOC of the second bank is controlled to be the second SOC. The second SOC is a particular value within an SOC range in which a product generated by a side reaction can be redissolved by a reversible reaction.

In the redox flow battery system of the present disclosure, it becomes possible to enhance the energy density by expanding the usage range of the SOC in the first bank. The battery capacity can be secured as the entire system. It becomes possible to recover the electrolytic solution of the second bank by controlling the SOC of the second bank to be the SOC in which the side reaction product is redissolved. Therefore, it becomes possible to improve the decrease in the battery performance due to the side reaction. In the redox flow battery system of the present disclosure, it becomes possible to perform the recovery work of the electrolytic solution of the second bank while performing charging or discharging in the first bank. It becomes possible to perform the recovery work of the electrolytic solution without stopping the system, and hence there are less operation restrictions.

The expression of "the side reaction product is redissolved" described above is defined as causing the state of the electrolytic solution that has changed by charging or discharging in a particular SOC range to return to the original state in a broad sense. This is not limited to causing a solid deposit to return to an ion in the electrolytic solution and may or may not be associated with changes in phase of gas, solid, and liquid. In the case of an electrolytic solution including a solid active material such as zinc, controlling the amount of electrodeposition thereof is also included. An active material may be deposited on a surface of the electrode by a side reaction. When a deposit due to a side reaction adheres to the electrode, the reactivity of the electrode deteriorates. In other words, the battery performance decreases. A catalyst and the like may be caused to adhere to a surface of the electrode for the purpose of improving the reactivity of the electrode. The decrease in the battery performance is also caused when the deposit due to the side reaction is deposited so as to cover the catalyst and the like. It becomes possible to maintain the state of the surface of the electrode by redissolving the deposit that has adhered to the surface of the electrode. As a result, it becomes possible to suppress the decrease in the battery performance.

(2) In the redox flow battery system of the present disclosure, the second state of charge may be different from the first state of charge by ±2% or more.

The redox flow battery system described above controls the SOC of the second bank to be shifted from the SOC of the first bank by ±2% or more. The state in which the difference between the SOC of the first bank and the SOC of the second bank is ±2% or more can be realized by intentionally shifting the SOC of the second bank from the SOC of the first bank.

(3) In the redox flow battery system of the present disclosure, the first state of charge may have a range of the first state of charge defined by an upper limit and a lower limit, the second state of charge may have a range of the second state of charge defined by an upper limit and a lower limit, and the range of the second state of charge may be 30% or less of the range of the first state of charge.

The redox flow battery system described above easily performs the recovery work of the electrolytic solution of the second bank.

(4) In the redox flow battery system of the present disclosure, a rate of a number of the second banks to a total number of the plurality of banks may be 30% or less.

In the redox flow battery system described above, out of the plurality of banks, the second banks are smaller in number than the first banks. In other words, the first banks are greater in number. The number of the first banks that perform charging and discharging is greater than the number of the second banks that perform the recovery work of the electrolytic solution, and hence the battery capacity is easily secured as the entire system.

(5) In the redox flow battery system of the present disclosure, the controller may control each of the plurality of banks to include a time period set to the first state of charge and a time period set to the second state of charge.

The redox flow battery system described above is capable of performing the recovery work of the electrolytic solution for all of the banks. The bank functions as the first bank in the time period set to the first state of charge. The bank functions as the second bank in the time period set to the second state of charge. In other words, there are a time period in which each bank is the first bank that performs charging and discharging and a time period in which each bank is the second bank that performs the recovery work of the electrolytic solution. The recovery work of the electrolytic solution can be performed by each predetermined amount of time for each of the banks.

(6) In the redox flow battery system according to (5) described above, a rate of an amount of time set to the second state of charge to a total amount of time of an amount of time set to the first state of charge and the amount of time set to the second state of charge may be 30% or less.

In the redox flow battery system described above, the amount of time the recovery work of the electrolytic solution is performed for each of the banks is set to be relatively short.

(7) In the redox flow battery system of the present disclosure, when a particular bank out of the plurality of first banks is caused to transition from the first state of charge to the second state of charge, the controller may perform charging or discharging from the particular bank to the second bank.

In the redox flow battery system described above, it becomes possible to cause a particular bank to transition from the first state of charge to the second state of charge by performing charging or discharging between the banks even when charging or discharging is not performed with respect to an external power source or a load. In the example described above, it becomes possible to perform the transition of the second bank from the second state of charge to the first state of charge at the same time.

(8) In the redox flow battery system of the present disclosure, a rate of a number of the second banks to a total number of the plurality of banks may be represented by x, and the controller may discharge or charge a particular bank out of the plurality of first banks by a value that is 1/(1-x) times or more of an average value obtained by dividing a value of a discharging amount or a charging amount to the plurality of first banks by the total number of the plurality of banks when the particular bank is caused to transition from the first state of charge to the second state of charge.

The redox flow battery system described above causes a particular bank to transition to the second bank by preferentially discharging or charging the particular bank as compared to other banks when the plurality of first banks are discharged or charged. Therefore, a shorter amount of transition time is required as compared to a case where all of the banks are charged or discharged by an average value.

(9) In the redox flow battery system of the present disclosure, a rate of an amount of time set to the second state of charge to a total amount of time of an amount of time set to the first state of charge and the amount of time set to the second state of charge may be represented by y, and the controller may discharge or charge a particular bank out of the plurality of first banks by a value that is 1/(1-y) times or more of an average value obtained by dividing a value of a discharging amount or a charging amount to the plurality of first banks by the total number of the plurality of banks when the particular bank is caused to transition from the first state of charge to the second state of charge.

The redox flow battery system described above causes a particular bank to transition to the second bank by preferentially discharging or charging the particular bank as compared to other banks when the plurality of first banks are discharged or charged. Therefore, a shorter amount of transition time is required as compared to a case where all of the banks are charged or discharged by an average value.

(10) In the redox flow battery system of the present disclosure, each of the plurality of banks may have a counter that quantifies a generation amount of a side reaction product in the electrolytic solution.

The redox flow battery system described above is capable of suitably determining a timing for performing the recovery work of the electrolytic solution.

(11) In the redox flow battery system according (10) described above, the counter may quantify the generation amount of the side reaction product in the electrolytic solution as a function of each of a value of a state of charge, a temperature of the electrolytic solution, and an amount of time in each of the plurality of banks.

The redox flow battery system described above is capable of suitably obtaining the generation amount of the side reaction product.

### [Details Embodiment of Present Disclosure]

A specific example of the redox flow battery system of the present disclosure is described with reference to the drawings. The redox flow battery may be referred to as an "RF battery" below. The same reference characters in the drawings indicate the same or equivalent parts.

The invention is not limited to the exemplifications above and is defined by the scope of claims. All modifications made within the scope and spirit equivalent to those of the claims are intended to be included in the invention.

### <Overview of RF Battery System>

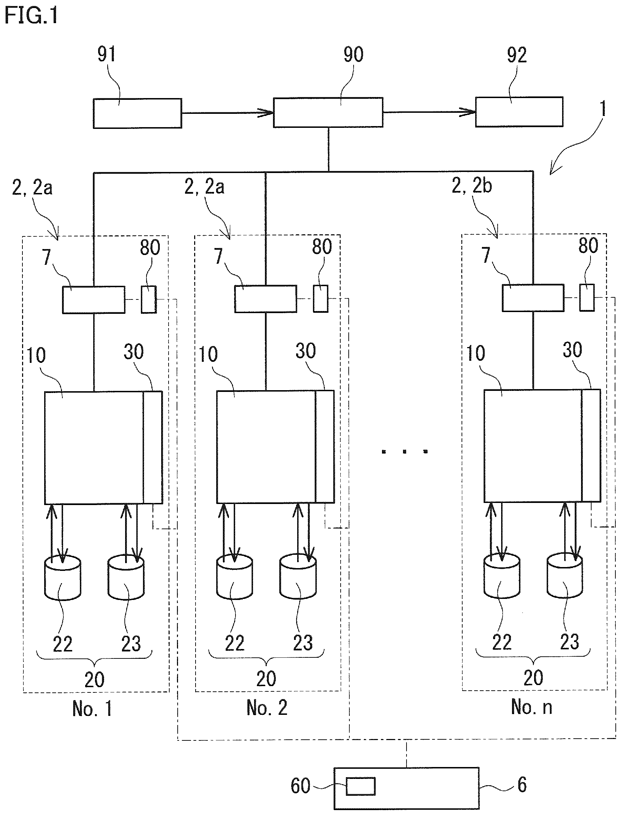

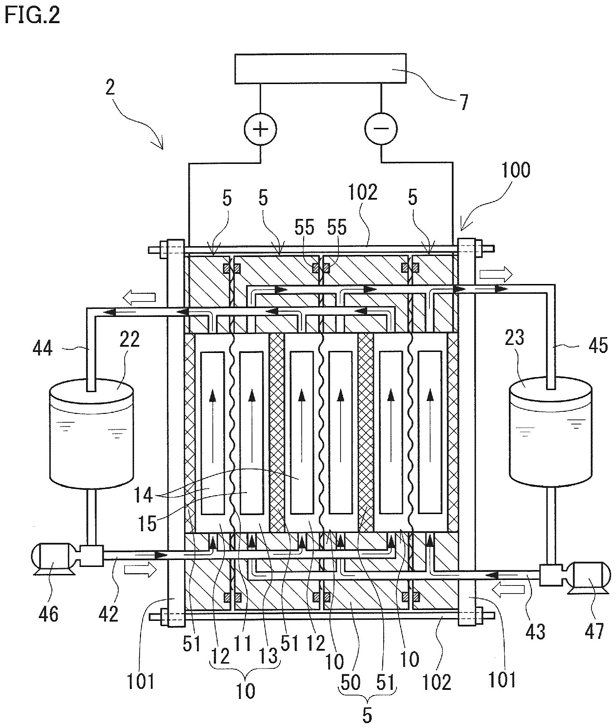

With reference to Fig. 1 and Fig. 2, an RF battery system 1 according to the embodiment is described. As shown in Fig. 1, RF battery system 1 includes a plurality of banks 2, power conversion devices (PCS: Power Conditioning System) 7 respectively provided in plurality of banks 2, and a battery control device (BMS: Battery Management System) 6. Each bank 2 includes a battery cell 10.

RF battery system 1 is representatively connected to an external power source 91 and an external load 92 via a transformer facility 90. RF battery system 1 can be charged with electric power supplied from power source 91 and discharge the charged electric power to load 92. Power source 91 is a power generation facility using natural energy such as solar power and wind power or other general power plants. Load 92 is a power system, a consumer, or the like. RF battery system 1 is used for the purpose of load leveling, the purpose of instantaneous voltage drop compensation, an emergency power source, and the like, and the purpose of output smoothing of natural energy power generation, for example.

One feature of RF battery system 1 of the embodiment is as follows. In plurality of banks 2, not all of the SOCs of the banks are aligned with each other, and the SOCs of some banks are shifted from each other. Specifically, plurality of banks 2 include a first bank 2a and a second bank 2b. A controller 60 that controls the SOC of each bank 2 is included. Controller 60 performs control such that the SOC of second bank 2b is different from the SOC of first bank 2a.

A basic configuration of banks 2 constituting RF battery system 1 is described first below. Then, the features of RF battery system 1 are described in detail.

### <Bank>

Individual banks 2 can independently control the charging and discharging of battery cells 10. Bank 2 includes battery cell 10, an electrolytic solution tank 20, and a power conversion device 7. An electrolytic solution is supplied to battery cell 10 from electrolytic solution tank 20. Electrolytic solution tank 20 stores therein the electrolytic solution. Electrolytic solution tank 20 has a positive electrolyte tank 22 and a negative electrolyte tank 23. Positive electrolyte tank 22 stores therein a positive electrolyte. Negative electrolyte tank 23 stores therein a negative electrolyte. Bank 2 performs charging and discharging by supplying the electrolytic solution to battery cell 10 from electrolytic solution tank 20. Bank 2 can function as a secondary battery by itself.

### (Battery Cell)

Battery cell 10 is a cell of a secondary battery. In other words, battery cell 10 performs charging and discharging by the supply of the electrolytic solution. As shown in Fig. 2, battery cell 10 has a positive electrode 14, a negative electrode 15, and a membrane 11 disposed between positive electrode 14 and negative electrode 15. Battery cell 10 is separated into a positive cell 12 and a negative cell 13 by membrane 11. Positive electrode 14 is built in positive cell 12. Negative electrode 15 is built in negative cell 13.

The positive electrolyte is supplied to positive cell 12. The negative electrolyte is supplied to negative cell 13. Bank 2 of this example includes a supply pipe 42 and a return pipe 44 that connect battery cell 10 and positive electrolyte tank 22 to each other. Bank 2 includes a supply pipe 43 and a return pipe 45 that connect battery cell 10 and negative electrolyte tank 23 to each other. Pumps 46, 47 are provided in each of supply pipes 42, 43. The positive electrolyte is supplied to positive cell 12 from positive electrolyte tank 22 through supply pipe 42 by pump 46. The positive electrolyte that has passed through positive cell 12 and been discharged from positive cell 12 is returned to positive electrolyte tank 22 through return pipe 44. The negative electrolyte is supplied to negative cell 13 from negative electrolyte tank 23 through supply pipe 43 by pump 47. The negative electrolyte that has passed through negative cell 13 and been discharged from negative cell 13 is returned to negative electrolyte tank 23 through return pipe 45. In other words, the electrolytic solution circulates between electrolytic solution tank 20 and battery cell 10.

Bank 2 may include a cell stack 100 in which plurality of battery cells 10 are stacked. Cell stack 100 includes a stacked body in which a cell frame 5, positive electrode 14, membrane 11, and negative electrode 15 are repeatedly stacked in the stated order, and two end plates 101 that sandwich the stacked body from both sides. Cell stack 100 is configured by sandwiching the stacked body by two end plates 101 and fastening the place between end plates 101 by fastening members 102. In general, cell stack 100 has a structure in which a predetermined number of battery cells 10 constitute a sub stack (not shown) and a plurality of sub stacks are stacked.

Cell frame 5 has a bipolar plate 51 disposed between positive electrode 14 and negative electrode 15, and a frame body 50 provided around bipolar plate 51. On the inner side of frame body 50, positive electrode 14 and negative electrode 15 are housed across bipolar plate 51. One battery cell 10 is configured by disposing positive electrode 14 and negative electrode 15 across membrane 11 between bipolar plates 51 of adjacent cell frames 5. A seal member 55 is disposed between frame bodies 50 in order to suppress the leakage of the electrolytic solution from battery cells 10.

Bank 2 may include plurality of cell stacks 100. Plurality of cell stacks 100 may be connected in series or parallelly connected. When bank 2 includes plurality of cell stacks 100, one electrolytic solution tank 20 or plurality of electrolytic solution tanks 20 may be included for plurality of cell stacks 100. When one electrolytic solution tank 20 is included, one positive electrolyte tank 22 and one negative electrolyte tank 23 are included. When plurality of electrolytic solution tanks 20 are included, plurality of positive electrolyte tanks 22 and plurality of negative electrolyte tanks 23 are included. When bank 2 includes plurality of battery cells 10, electrolytic solution with uniform SOC is supplied to each battery cell 10.

### (Electrolytic Solution)

The electrolytic solution is representatively a solution including an active material ion. The active material ion is an ion that functions as an active material. A metal ion of which valence changes by oxidoreduction can be used as the active material ion. The active material ion is an ion of an element selected from a group consisting of manganese, vanadium, iron, chromium, titanium, and zinc, for example.

### <Characteristics of Electrolytic Solution>

The electrolytic solution of at least one of the positive electrolyte and the negative electrolyte has the following characteristics.
(1) A side reaction occurs and a side reaction product is generated in accordance with the SOC range at the time of charging or discharging.
(2) The side reaction product can be redissolved by a reversible reaction.

The electrolytic solution is an electrolytic solution in which a side reaction product can be generated by a side reaction in a high SOC region in which the SOC is high and the side reaction product can be redissolved by a reversible reaction in a region in which the SOC is relatively low, for example. Alternatively, the electrolytic solution is an electrolytic solution in which a side reaction product can be generated by a side reaction in a low SOC region in which the SOC is low and the side reaction product can be redissolved by a reversible reaction in a region in which the SOC is relatively high. Even when a side reaction occurs, the electrolytic solution as above can be recovered to the original state by redissolving the side reaction product by the control of the SOC. The side reaction product generated by the side reaction is a deposit of the active material ion, for example.

The electrolytic solution is an electrolytic solution containing a manganese ion, for example. When a positive electrolyte containing manganese ion is used, the manganese oxide may be deposited in the positive electrolyte in the high SOC region at the time of charging. The manganese oxide may be decomposed into a manganese ion and redissolved into the positive electrolyte in the low SOC region. When the positive electrolyte is an electrolytic solution containing a manganese ion, the negative electrolyte is an electrolytic solution containing a titanium ion, for example.

### (Power Conversion Device)

Power conversion device 7 controls the charging and discharging of battery cell 10. Battery cell 10 performs charging and discharging via power conversion device 7. Each bank 2 can independently control the charging and discharging of battery cell 10 by power conversion device 7. Power conversion device 7 is controlled by a battery control device 6. An AC/DC conversion device can be used for power conversion device 7, for example.

### (Monitor Cell)

As shown in Fig. 1, each bank 2 includes a monitor cell 30 for measuring the SOC. An electrolytic solution in common with the electrolytic solution supplied to battery cell 10 is supplied to monitor cell 30. In other words, the electrolytic solution supplied to battery cell 10 and the electrolytic solution supplied to monitor cell 30 are supplied from same electrolytic solution tank 20. A single cell having basically the same configuration as battery cell 10 described above can be used as monitor cell 30. Monitor cell 30 does not perform charging and discharging. The SOC of bank 2 can be obtained from open circuit voltage (OCV) of monitor cell 30.

Monitor cell 30 may be provided separately from battery cell 10 or some cells of cell stack 100 described above may be configured as the monitor cell. When monitor cell 30 is separately provided, monitor cell 30 may be provided on the upstream side of battery cell 10. The electrolytic solution before being charged or discharged by battery cell 10 is supplied to monitor cell 30 provided upstream from battery cell 10. This is because the SOC detected by monitor cell 30 differs from the SOC of the electrolytic solution in electrolytic solution tank 20 when monitor cell 30 is provided downstream from battery cell 10. When bank 2 includes plurality of battery cells 10, monitor cell 30 measures an average value of the SOCs of plurality of battery cells 10.

### <Features of RF battery System>

As shown in Fig. 1, RF battery system 1 includes plurality of banks 2 and battery control device 6. The number of banks 2 is four or more, for example. The battery capacity of the entire system can be increased as the number of banks 2 becomes larger. The number of banks 2 may be further 11 or more or 16 or more. When the number of banks 2 becomes greater, the entire system becomes enormous and the management of bank 2 becomes complicated. The upper limit of the number of banks 2 is 100 or less or further 50 or less, for example. The number of banks 2 may be 11 or more and 100 or less, or 16 or more and 50 or less, for example. In Fig. 1, each bank 2 is indicated as No. 1, No. 2 ··· No. n. Here, n is a natural number.

### (Plurality of Banks)

Plurality of banks 2 include plurality of first banks 2a and one or more second banks 2b. First banks 2a are banks controlled to be in the first SOC out of plurality of banks 2. Second bank 2b is a bank other than first banks 2a out of plurality of banks 2. Second bank 2b is a bank controlled to be in the second SOC different from the first SOC. Here, first banks 2a and second bank 2b are not physically fixed. Individual banks 2 may function as first banks 2a or second banks 2b. Therefore, there may be a state in which all banks 2 are operating as first banks 2a, in other words, a state in which only plurality of first banks 2a exist during the operation of RF battery system 1 or at a certain time point. In other words, there may be a state in which there are no banks 2 that function as second bank 2b and the number of second banks 2b becomes zero. RF battery system 1 of this embodiment is not only placed in a state in which second bank 2b is constantly included but also includes being in a state in which one or more second banks 2b are included only at a certain time point during the operation.

### <First Bank>

First bank 2a is a bank that performs charging and discharging with respect to external power source 91 or load 92. The SOC of first bank 2a fluctuates in accordance with charging and discharging. The SOC of first bank 2a is controlled to be in the first SOC at the time of charging and discharging. The first SOC has a first SOC range. The first SOC is a particular value within the first SOC range. The first SOC range is a numerical value width defined by an upper limit and a lower limit of the first SOC. In other words, the first SOC range is a difference between the upper limit and the lower limit of a range possible for the first SOC. The first SOC range is a range obtained by expanding a usage range of a normal SOC. The usage range of the normal SOC is an SOC range in which a side reaction hardly occurs and a side reaction product is hardly generated. In other words, the usage range of the normal SOC is an SOC range in which the deterioration of the electrolytic solution due to a side reaction hardly progresses and the battery performance can be maintained. The SOC range in which the side reaction product is hardly generated described above is a range in which the rate of the active material consumed by the generation of the side reaction product is 10 mol% or less where the total amount of elements serving as the active material included in the electrolytic solution is 100 mol% when charging and discharging are performed for one week within a certain SOC range, for example. It is preferred that the period of time for charging and discharging within the SOC range be two weeks or further one month. It is preferred that the rate of the active material consumed by the generation of the side reaction product be 5 mol% or less, or further 1 mol% or less. For example, when manganese oxide is generated as a side reaction product in a positive electrolyte containing a manganese ion as the active material, manganese is consumed in the generation of the side reaction product. The range obtained by expanding the usage range of the normal SOC includes an SOC range in which a side reaction occurs and a side reaction product is generated by charging or discharging in addition to the usage range of the normal SOC. The first SOC includes at least one of a high SOC region and a low SOC region. The high SOC region is a region in which the SOC is higher than an upper limit value of the usage range of the normal SOC. The low SOC region is a region in which the SOC is lower than a lower limit value of the usage range of the normal SOC. In the high SOC region and the low SOC region, a side reaction product may be generated. The first SOC is a range obtained by combining the usage range of the normal SOC and at least one of the high SOC region and the low SOC region.

The usage range of the normal SOC described above differs depending on the electrolytic solution to be used. The usage range of the normal SOC is obtained in advance by a test using the electrolytic solution to be used. The range expanded from the usage range of the normal SOC, in other words, the range of each of the high SOC region and the low SOC region only needs to be set as appropriate. The battery capacity of first bank 2a increases by expanding the usage range of the SOC in first bank 2a. As a result, the energy density of the entire system can be enhanced. The range of the high SOC region or the range of the low SOC region is 5% or more, further 10% or more, or 15% or more of the usage range of the normal SOC, for example. The usage range described above is a difference between the upper limit and the lower limit of the usage range. For example, when the usage range of the normal SOC is from 20% to 80%, the difference between the upper limit and the lower limit is 80%-20%=60%. When the range of the high SOC region is 10% of the usage range, the range of the high SOC region is 60%×10%=6%. The usage range of the SOC obtained by combining the usage range of the normal SOC and the high SOC region is from 20% to 86%. The first SOC range in this case is 86%-20%=66%. In this case, the usage range of the SOC is expanded by 10% as compared to the usage range of the normal SOC, and hence the battery capacity of first bank 2a is increased by 10%. When the range of the low SOC region is 10% of the usage range, the usage range of the SOC is from 14% to 80%. The first SOC range in this case is 80%-14%=66%. The battery capacity of first bank 2a increases by 10% in this case as well. The reason the energy density of the entire system improves is described in detail in the section of <Trial Calculation Example of Energy Density> described below.

The number of first banks 2a is 10 or more, or further 15 or more, for example. The battery capacity is secured more easily as the entire system as the number of first banks 2a becomes greater.

The plurality of first banks 2a are controlled such that the SOCs of first banks 2a are not shifted from each other at the time of charging and discharging. In other words, all of the SOCs of first banks 2a are controlled to be aligned with each other. Specifically, the difference in the SOC between first banks 2a is less than ±2%, or further ±1% or less. The difference in the SOC between first banks 2a is a difference between an average value of the SOCs of all first banks 2a and the value of the SOC of each first bank 2a.

### <Second Bank>

Second bank 2b is a bank that performs recovery work of the electrolytic solution. The SOC of second bank 2b is controlled to be the second SOC. The second SOC has a second SOC range. The second SOC is a particular value within the second SOC range. The second SOC range is a numerical value width defined by an upper limit and a lower limit of the second SOC. In other words, the second SOC range is a difference between the upper limit and the lower limit of a range possible for the second SOC. The second SOC range is an SOC range in which the side reaction product described above can be redissolved by a reversible reaction.

The SOC range in which the side reaction product described above is redissolved differs depending on the electrolytic solution to be used. The SOC range in which the side reaction product is redissolved is obtained in advance by a test using the electrolytic solution to be used. For example, when the side reaction product is redissolved in a region in which the SOC is 30% or less, the second SOC only needs to be 30% or less and may be 20% or less. In this case, as the SOC becomes lower, the speed of the reversible reaction becomes higher, and hence the side reaction product tends to be easily redissolved. When the side reaction product is redissolved in a region in which the SOC is 70% or more, the second SOC only needs to be 70% or more and may be 80% or more. In this case, as the SOC becomes higher, the speed of the reversible reaction becomes higher, and hence the side reaction product tends to be easily redissolved. The second SOC only needs to be a particular value within the SOC range in which the side reaction product described above is redissolved and may partially overlap with the first SOC range described above. For example, when the first SOC range is from 20% to 86%, the second SOC range may be from 20% to 30% or may be from 0 to 30%. When the second SOC range at least partially overlaps with the first SOC range, second bank 2b may perform charging and discharging in the overlapping range. In other words, in second bank 2b, battery cell 10 can also perform charging and discharging during the recovery work of the electrolytic solution. Needless to say, battery cell 10 does not necessarily need to perform charging and discharging in second bank 2b.

The second SOC range is smaller than the first SOC range, for example. The second SOC range may be 30% or less of the first SOC range, for example. For example, when the first SOC range is 66% as described above, 30% of the first SOC range is about 20%. For example, when the second SOC range is from 20% to 30% and the difference between the upper limit and the lower limit thereof is 10%, the second SOC range is about 15% of the first SOC range. In other words, the second SOC range is 30% or less of the first SOC range.

The number of second banks 2b is smaller than the number of first banks 2a. A rate x of the number of second banks 2b to the total number of plurality of banks 2 is 30% or less, for example. Out of plurality of banks 2, second banks 2b are smaller in number. In other words, first banks 2a are greater in number. The number of first banks 2a is great, and hence the battery capacity is easily secured as the entire system. Rate x may be 20% or less, or further 10% or less, for example.

### (Specific Examples of First SOC and Second SOC)

An example of specific ranges of the first SOC and the second SOC is shown. Here, an example of a case where a titanium/manganese-based electrolytic solution is used as the electrolytic solution is shown. In the titanium/manganese-based electrolytic solution, a positive electrolyte contains a manganese ion, and a negative electrolyte contains a titanium ion. In the case of the titanium/manganese-based electrolytic solution, the usage range of the normal SOC is roughly from 20% to 80%. In a high SOC region in which the SOC exceeds 80%, manganese oxide may be deposited in the positive electrolyte as a side reaction product. The range of the high SOC region is 3% or more, further 6% or more, or 12% or more, for example. As the range of the high SOC region becomes greater, a usable battery capacity increases because the usage range of the SOC becomes expanded than the usage range of the normal SOC. The usage range of the SOC at the time of charging and discharging, in other words, the first SOC range is from 20% to 83%, further from 20% to 86%, or from 20% to 92%, for example. As the SOC becomes higher, the speed of the side reaction becomes higher, and hence the deposition amount of manganese oxide increases. The upper limit of the first SOC range is 100%, or further 95%, for example. When the upper limit of the first SOC range is 95%, the decrease in battery efficiency due to the increase of internal resistance is easily suppressed.

The SOC range in which manganese oxide in the positive electrolyte can be redissolved by a reversible reaction is roughly 30% or less. In other words, the SOC range in which the side reaction product can be redissolved by the reversible reaction, that is, the second SOC range is from 0% to 30% or further from 0% to 20%, for example. As the SOC becomes lower, the speed of the reversible reaction becomes higher, and hence the manganese oxide is redissolved more easily. The second SOC may be lower than the usage range of the normal SOC described above. The second SOC may be less than 20%. When the upper limit of the second SOC range is less than 20%, the manganese oxide is redissolved more easily. The second SOC may partially overlap with the usage range of the normal SOC described above. The second SOC may be from 20% to 30%, for example.

Another electrolytic solution is a vanadium-based electrolytic solution, for example. In the vanadium-based electrolytic solution, both of a positive electrolyte and a negative electrolyte contain a vanadium ion. The valences of the vanadium ion of the positive electrolyte and the vanadium ion of the negative electrolyte are different from each other. In the case of the vanadium-based electrolytic solution, the usage range of the normal SOC is roughly from 5% to 95%.

### (Battery Control Device)

Battery control device 6 not only controls the operation of RF battery system 1 but also includes controlling actions necessary for monitoring and improving the state of each bank 2. Battery control device 6 independently manages the charging and discharging of each bank 2. Therefore, it becomes possible to perform the recovery work of the electrolytic solution of second bank 2b while performing charging or discharging in first banks 2a. Battery control device 6 issues an action command to power conversion device 7 of each bank 2. Power conversion device 7 of each bank 2 controls the charging and discharging of battery cell 10 based on the action command from battery control device 6. Battery control device 6 issues a charging/discharging command to power conversion device 7 of each first bank 2a when charging and discharging are performed with respect to power source 91 or load 92, for example. In first bank 2a, battery cell 10 performs charging or discharging in accordance with the requested charging amount or discharging amount. Battery control device 6 issues a recovery work command to power conversion device 7 of second bank 2b. In second bank 2b, the recovery work of the electrolytic solution is executed.

Battery control device 6 is representatively configured by a computer. The computer includes a processor, a memory, a timer, and the like. The memory has a control program to be executed by the processor and various data stored therein. The processor reads out and executes the control program stored in the memory. The program includes an instruction group relating to processing by controller 60.

### <Controller>

### (SOC Control)

Battery control device 6 has controller 60. Controller 60 controls power conversion device 7 and controls the SOC of each bank 2. Controller 60 performs SOC control that controls the SOC of second bank 2b to be the second SOC different from the first SOC. It is preferred that the second SOC be different from the first SOC by ±2% or more. Therefore, in the SOC control, the SOC of second bank 2b is controlled to be shifted from the SOC of first bank 2a by ±2% or more. A state in which the difference between the SOC of first bank 2a and the SOC of second bank 2b is ±2% or more can be realized by intentionally shifting the SOC of second bank 2b. The second SOC may be different from the first SOC by ±3% or more or may be further different from the first SOC by ±4% or more.

The SOC of second bank 2b is controlled to be the second SOC different from the first SOC by the SOC control described above. By maintaining the SOC of second bank 2b to be the second SOC for a certain amount of time, the side reaction product in the electrolytic solution of second bank 2b is redissolved. As a result, the electrolytic solution of second bank 2b can be recovered. The decrease in the battery performance in second bank 2b can be improved. Second bank 2b may perform charging and discharging within the second SOC range described above or may stand by or stop without performing charging and discharging. The amount of time by which the SOC of second bank 2b is maintained at the second SOC after reaching the second SOC is an amount of time it takes for the side reaction product in the electrolytic solution of second bank 2b to be redissolved and for the electrolytic solution to recover to the original state or more. As the amount of time maintained in the second SOC becomes longer, the side reaction product in the electrolytic solution decreases more by redissolving. After the electrolytic solution recovers to the original state, the second SOC may be maintained, but the side reaction product cannot be dissolved any further. The amount of time maintained in the second SOC may be one minute or more and 24 hours or less, further two hours or more and 16 hours or less, or four hours or more and 12 hours or less, for example. The pump that circulates the electrolytic solution may be stopped or may not be stopped in second bank 2b that does not perform charging and discharging after the SOC of second bank 2b reaches the second SOC. By stopping the pump, the electric power consumption by the pump can be reduced.

### (Rotation Control)

Controller 60 may perform rotation control so as to include the time period set to the first SOC and the time period set to the second SOC for each of plurality of banks 2. In the time period in which controller 60 sets the SOC of bank 2 to be the first SOC, bank 2 is the bank that performs charging and discharging. In the time period in which controller 60 sets the SOC of bank 2 to be the second SOC, bank 2 is the bank that performs the recovery work of the electrolytic solution. In other words, in each bank 2, there are a time period in which each bank 2 is first bank 2a that performs charging and discharging and a time period in which each bank 2 is second bank 2b that performs the recovery work of the electrolytic solution. For example, in a certain time period, certain bank 2 functions as first bank 2a, and another bank 2 functions as second bank 2b. In another time period, certain bank 2 transitions from a state of first bank 2a to a state of second bank 2b, and another bank 2 transitions from a state of second bank 2b to a state of first bank 2a. It becomes possible to perform the recovery work of the electrolytic solution in rotation for all of plurality of banks 2 by switching each bank 2 to second bank 2b in turn by every predetermined amount of time by the rotation control described above.

The time period set to the first SOC is set to a time period within the amount of time it takes for the generation amount of the side reaction product in the electrolytic solution in first bank 2a to reach a predetermined amount, for example. When the generation amount of the side reaction product in the electrolytic solution is less than the predetermined amount, the battery performance of first bank 2a can be maintained even when the side reaction product is generated by a certain amount. The time period set to the second SOC is set to an amount of time it takes for the side reaction product in the electrolytic solution of second bank 2b to be redissolved and for the electrolytic solution of second bank 2b to recover to the original state or more. The expression of "the electrolytic solution recovers to the original state" means a state in which the generation amount of the side reaction product in the electrolytic solution is a certain amount or less. The amount of time it takes for the electrolytic solution to recover to the original state is obtained in advance by a test with use of the electrolytic solution to be used.

A rate y of the amount of time set to the second SOC to the total amount of time of the amount of time set to the first SOC and the amount of time set to the second SOC is 30% or less, for example. When rate y of the amount of time set to the second SOC is 30% or less, the amount of time functioning as second bank 2b is short. In other words, the amount of the recovery work time of the electrolytic solution in each bank 2 is relatively short. Rate y may be 20% or less, or further 10% or less, for example.

### <Example of Rotation Control>

For example, the total number of plurality of banks 2 is 11. The number of first banks 2a is 10. The number of second banks 2b is 1. In this case, rate x of the number of second banks 2b is 1/11≈9.1%. Each of banks 2 is set to No. 1, No. 2 ··· No. 11. At a certain time, out of plurality of banks 2, No. 1 to No. 10 are first banks 2a controlled to be in the first SOC, and remaining No. 11 is second bank 2b controlled to be in the second SOC. Each of banks 2 is periodically switched to second bank 2b in turn. Here, the time period set to the second SOC is one day.

No. 11 is switched from second bank 2b to first bank 2a after one day passes from a certain time. Any of No. 1, No. 2 ··· No. 10 is switched from first bank 2a to second bank 2b in place of No. 11. Here, No. 10 is switched to second bank 2b. At this time, No. 1 to No. 9 and No. 11 excluding No. 10 are first banks 2a. The number of first banks 2a and the number of second banks 2b do not change. When another day passes, No. 10 is switched to first bank 2a, and No. 9 is switched to second bank 2b. The recovery work of the electrolytic solution can be performed for all banks 2 by performing switching from first bank 2a to second bank 2b in turn in the order of No. 11, No. 10, No. 9, ··· No. 1, No. 11 ···, for example, as time elapses as above. In the condition described above, a time period in which particular bank 2 is continuously set to be the first SOC is ten days. In other words, the amount of time charging and discharging is possible by first bank 2a is ten days. A cycle from when individual banks 2 changes from the state of second bank 2b to the state of second bank 2b again is 11 days. Rate y of the amount of time set to the second SOC to the total amount of time of the amount of time set to the first SOC and the amount of time set to the first SOC is 1(day)/11(day)≈0.091.

### (Transition Control)

Controller 60 may perform transition control that causes particular first bank 2a out of plurality of first banks 2a to transition from the first SOC to the second SOC. The expression of "causing transition from the first SOC to the second SOC" means to switch particular first bank 2a to second bank 2b. When the SOC of particular first bank 2a is higher than the second SOC, particular first bank 2a is discharged, and the SOC of particular first bank 2a is lowered to the second SOC. When the SOC of particular first bank 2a is lower than the second SOC, particular first bank 2a is charged, and the SOC of particular first bank 2a is raised to the second SOC. The transition control performs one of first transition control, second transition control, and third transition control shown below, for example.

### <First Transition Control>

The first transition control performs charging or discharging from particular first bank 2a to second bank 2b.

### <Example of First Transition Control>

An example of the first transition control when the SOC of particular first bank 2a is higher than the second SOC is described. Here, as described in the example of the rotation control, a case where one day has passed from a certain time is conceived. In other words, a case where transition from the first SOC to the second SOC is performed and switching from first bank 2a to second bank 2b is performed for No. 10 is conceived. At this time, when No. 11 is switched from second bank 2b to first bank 2a, a command is issued to each power conversion device 7 so as to discharge No. 10 and charge No. 11. By discharging No. 10, No. 10 is changed from first bank 2a to second bank 2b. By charging No. 11, No. 11 is changed from second bank 2b to first bank 2a. The transition control can be performed even when charging or discharging is not performed with respect to external power source 91 or load 92 because charging or discharging is performed between particular first bank 2a and second bank 2b.

### <Second Transition Control>

The second transition control preferentially discharges or charges particular first bank 2a as compared to other banks 2 when discharging or charging is performed with respect to external power source 91 or load 92. Specifically, particular first bank 2a is discharged or charged by a value that is 1/(1-x) times or more of an average value obtained by dividing the discharging amount or the charging amount to the plurality of first banks 2a by the total number of plurality of banks 2. Here, x represents a rate of the number of second banks 2b to the total number of plurality of banks 2.

### <Example of Second Transition Control>

An example in which only particular bank 2 transitions to second bank 2b from a state in which all banks 2 are operating as first banks 2a is described. The total number of plurality of banks 2 is 11. The number of first banks 2a after the transition is 10. The number of second banks 2b after the transition is 1. Rate x of the number of second banks 2b is 1/11≈0.091. Here, 1/(1-x) is 1.1. The rated output of one bank 2 is 100 kW. The rated output of the entire system obtained by subtracting second bank 2b is 100 (kW)×10=1000 kW.

Here, a case where No. 11 is switched from first bank 2a to second bank 2b and transitions from the first SOC to the second SOC from a state in which No. 1 to No. 11 are first banks 2a described in the example of the rotation control is conceived. In this case, when discharging to external load 92 is performed, the allocation of the discharging amount to No. 11 is increased so as to preferentially discharge No. 11. Specifically, No. 11 is discharged by a value exceeding an average value obtained by dividing the value of the discharging amount to plurality of first banks 2a by the number of all banks 2. For example, when a discharging command for 1000 kW is received, No. 11 is discharged by a rated output of 100 kW. No. 1 to No. 10 that are first banks 2a are discharged by a value obtained by averaging the remaining discharging amount of 900 kW, in other words, 90 kW. When the discharging amount to each bank 2 is evenly allocated, an average value obtained by dividing the discharging command value by the total number of banks 2 is 1000/11-90.9 kW. A value obtained by dividing the discharging amount of 100 kW of No. 11 described above by this average value is 100/(1000/11)=1.1. The discharging amount of 100 kW of No. 11 is 1/(1-x)=1.1 times or more of the average value described above. No. 11 is preferentially discharged by a value that is 1.1 times or more of the average value described above, and hence the amount of transition time can be caused to be shorter.

As an example of another second transition control, a case where one day has passed from a certain time is conceived as described in the example of the rotation control described above. In other words, a case where transition from the first SOC to the second SOC is performed and switching from first bank 2a to second bank 2b is performed for No. 10 is conceived. In this case, when discharging to external load 92 is performed, the allocation of the discharging amount to No. 10 is increased so as to preferentially discharge No. 10. Specifically, No. 10 is discharged by a value equal to or more than an average value obtained by dividing the value of the discharging amount to plurality of first banks 2a by the number of first banks 2a. For example, when a discharging command for 550 kW is received, No. 10 is discharged by a rated output of 100 kW. At this time, it is considered that No. 11 has not finished transitioning from the second SOC to the first SOC, and No. 11 is not discharged. Out of first banks 2a, No. 1 to No. 9 excluding No. 10 are discharged by a value obtained by averaging the remaining discharging amount of 450 kW, in other words, 50 kW. When the discharging amount to each bank 2 is evenly allocated, an average value obtained by dividing the discharging command value by the total number of banks 2 is 550/11=50 kW. A value obtained by dividing the discharging amount of 100 kW of No. 10 described above by this average value is 100/(550/11)=2. The discharging amount of 100 kW of No. 10 is 1/(1-x)=1.1 times or more of the average value described above. No. 10 is preferentially discharged by a value that is 1.1 times or more of the average value described above, and hence the amount of transition time can be caused to be shorter.

No. 11 is caused to transition from the second SOC to the first SOC and switched from second bank 2b to first bank 2a. In this case, when charging to external power source 91 is performed, the allocation of the charging amount to No. 11 is increased so as to preferentially charge No. 11. Specifically, No. 11 is charged by a value equal to or more than an average value obtained by dividing the value of the charging amount to plurality of first banks 2a by the number of first banks 2a. For example, when a charging command for 550 kW is received, No. 11 is charged by a rated output of 100 kW. At this time, No. 10 is not charged. No. 1 to No. 9 are charged by a value obtained by averaging the remaining charging amount of 450 kW, in other words, 50 kW. When the charging amount to each bank 2 is evenly allocated, an average value obtained by dividing the charging command value by the total number of banks 2 is 550/1 1=50 kW. As with the transition control of No. 10 described above, No. 11 is preferentially charged by a value that is 1.1 times or more of the average value described above, and hence the amount of transition time can be caused to be shorter.

### <Third Transition Control>

As with the second transition control described above, the third transition control preferentially discharges or charges particular first bank 2a as compared to other banks 2 when discharging or charging is performed with respect to external power source 91 or load 92. Unlike the second transition control, in the third transition control, particular first bank 2a is discharged or charged by a value that is 1/(1-y) times or more of an average value obtained by dividing the discharging amount or the charging amount to the plurality of first banks 2a by the total number of plurality of banks 2. Here, y represents the rate of the amount of time set to the second SOC to the total amount of time of the amount of time set to the first SOC and the amount of time set to the second SOC.

### <Example of Third Transition Control>

As with the example of the second transition control, an example in which only particular bank 2 transitions to second bank 2b from a state in which all banks 2 are operating as first banks 2a is described. The total number of plurality of banks 2 is 11. The number of first banks 2a after the transition is 10. The number of second banks 2b after the transition is 1. As described in the example of the rotation control described above, rate y of the amount of time set to the second SOC to the total amount of time of the amount of time set to the first SOC and the amount of time set to the second SOC is 1 (day)/11 (day)≈0.091. Here, 1/(1-y) is 1.1. The rated output of one bank 2 is 100 kW. The rated output of the entire system obtained by subtracting second bank 2b is 100 (kW)×10=1000 kW.

As with the example of the second transition control, a case where transition from the first SOC to the second SOC is performed and switching from first bank 2a to second bank 2b is performed for No. 11 is conceived. In the third transition control, the basic concept in which No. 11 is discharged by a value exceeding an average value obtained by dividing the value of the discharging amount to plurality of first banks 2a by the number of all banks 2 is similar to that of the second transition control. For example, when a discharging command for 1000 kW is received, No. 11 is discharged by a rated output of 100 kW. No. 1 to No. 10 that are first banks 2a are discharged by a value obtained by averaging the remaining discharging amount of 900 kW, in other words, 90 kW. When the discharging amount to each bank 2 is evenly allocated, an average value obtained by dividing the discharging command value by the total number of banks 2 is 1000/11-90.9 kW. A value obtained by dividing the discharging amount of 100 kW of No. 11 described above by this average value is 100/(1000/11)=1.1. The discharging amount of 100 kW of No. 11 is 1/(1-y)=1.1 times or more of the average value described above. No. 11 is preferentially discharged by a value that is 1.1 times or more of the average value described above, and hence the amount of transition time can be caused to be shorter.

### (Counter)

In the present embodiment, as shown in Fig. 1, each bank 2 includes a counter 80 that quantifies the generation amount of the side reaction product in the electrolytic solution. By including counter 80, a timing for causing transition from first bank 2a to second bank 2b by controller 60 can be suitably determined based on the generation amount of the side reaction product.

The generation amount of the side reaction product can be obtained by optical characteristics, physical properties, and the like of the electrolytic solution or obtained as functions of a value of the SOC, the temperature of the electrolytic solution, and the amount of time, for example. The optical characteristics of the electrolytic solution include color, transparency, and the like of the electrolytic solution, for example. In some electrolytic solutions, the color and the transparency may change when a side reaction product is generated. As the generation amount of the side reaction product becomes greater, the change in the color and the transparency tends to become greater. Therefore, the generation amount of the side reaction product can be quantitatively obtained by measuring the optical characteristics of the electrolytic solution. The optical characteristics of the electrolytic solution can be measured by performing image processing of an image photographed by a camera, or by using a spectrophotometer, for example. The physical properties of the electrolytic solution include viscosity, conductivity, density, and the like, for example. In some electrolytic solutions, the viscosity, the conductivity, and the density may change when a side reaction product is generated. As the generation amount of the side reaction product becomes greater, the change in the viscosity, the conductivity, and the density tends to become greater. Therefore, the generation amount of the side reaction product can also be quantitatively obtained by measuring the physical properties of the electrolytic solution.

The generation amount of a side reaction depends on each of parameters of the value of the SOC, the temperature of the electrolytic solution, and the amount of time. As the SOC becomes higher or the SOC becomes lower, a side reaction occurs more easily, and the generation amount of a side reaction product increases. As the temperature of the electrolytic solution becomes higher, the speed of the side reaction becomes greater, and the generation amount of the side reaction product increases. As the amount of time maintained in the SOC in which the side reaction occurs becomes longer, the generation amount of the side reaction product increases. Therefore, the generation amount of the side reaction product can be quantitatively obtained as the function of each parameter described above. In the present embodiment, the SOC is managed by electrical information such as the quantity of electricity and the amount of charging/discharging time at the time of charging or discharging in each bank 2.

### <Trial Calculation Example of Energy Density>

A trial calculation of the energy density in RF battery system 1 of the embodiment has been performed. Here, the trial calculation of the energy density of each of an embodiment model using the embodiment and a comparative model of a related-art design is performed and compared, and the energy densities are compared with each other. The energy density is obtained as the battery capacity per unit of the electrolytic solution amount.

### (Comparative Model)

The comparative model is an RF battery system including a plurality of banks. In the RF battery system, all the banks perform charging and discharging. In other words, the comparative model is different from the embodiment in that all the banks are the first banks and the second bank is not included.

The comparative model sets the usage range of the SOC to 20% to 80%.

A basic specification of the comparative model is shown in Table 1. The effective number of banks is the number of banks used in charging and discharging. In the comparative model, the effective number of banks is the same as the total number of banks.

### (Embodiment Model)

The embodiment model includes the same number of banks as the comparative model. The number of the first banks is 15. The number of the second banks is 1.

The embodiment model sets the usage range of the SOC to 20% to 86%. The usage range of the SOC of the embodiment model is expanded from the comparative model by 10%. Therefore, the time capacity of the embodiment model increases by 10% as compared to the comparative model.

A basic specification of the embodiment model is shown in Table 2. In the embodiment model, the effective number of banks is the same as the number of the first banks. In other words, the effective number of banks is a value obtained by subtracting the number of the second banks from the total number of banks. In Table 2, out of "t+δ" expressing the time capacity, "δ" represents an expanded width of the time capacity obtained by expanding the usage range of the SOC.

**[Table 1]**

| | | | |
|---|---|---|---|
| Total number of banks | n | 16 | |
| Effective number of banks | n | 16 | |
| Rated output per bank | P | 100 | kW/bank |
| Rated output of entire system | P×n | 1600 | kW |
| Time capacity | t | 3 | h |
| Battery capacity of entire system | P×n×t | 4800 | kWh |
| Solution amount per bank | A | 20 | m³/bank |
| Total solution amount of entire system | A×n | 320 | m³ |
| Energy density | P×n×t/(A×n)=P×t/A | 15 | kWh/m³ |

**[Table 2]**

| | | | |
|---|---|---|---|
| Total number of banks | n | 16 | |
| Effective number of banks | n-1 | 15 | |
| Rated output per bank | P | 100 | kW/bank |
| Rated output of entire system | P×(n-1) | 1500 | kW |
| Time capacity | t+δ | 3.3 | h |
| Battery capacity of entire system | P×(n-1)×(t+δ) | 4950 | kWh |
| Solution amount per bank | A | 20 | m³/bank |
| Total solution amount of entire system | A×n | 320 | m³ |
| Energy density | P×(n-1)×(t+δ)/(A×n) =P(t+δ)/A]×[(n-1)/n] | 15.5 | kWh/m³ |

From Table 1 and Table 2, the following is understood. In the embodiment model, the effective number of banks is smaller than that of the comparative model, but the energy density improves as compared to the comparative model. The reason thereof is because the time capacity is increased in the embodiment model because the usage range of the SOC is expanded as compared to the comparative model. From a calculation expression of the energy density, it can be said that an effect of improving the energy density is easily obtained when the number of the first banks is greater. In the embodiment model, the condition in which the effect is obtained more is when a total number of banks n is great or when expanded width δ of the time capacity is great, for example. Specifically, it is more effective when number of banks n is 30 or more, for example, or when the expanded width δ is 20% or more, for example.

### <Effects of Embodiment>

RF battery system 1 of the embodiment described above is capable of improving the decrease in battery characteristics due to the side reaction while being able to realize the high energy density from the following reasons.

It becomes possible to enhance the energy density by expanding the usage range of the SOC in first bank 2a. It becomes possible to recover the electrolytic solution of second bank 2b by controlling the SOC of second bank 2b to be the SOC in which a side reaction product is redissolved. Therefore, it becomes possible to improve the decrease in the battery performance due to a side reaction. It becomes possible to perform the recovery work of the electrolytic solution of second bank 2b while performing charging or discharging in first banks 2a. It becomes possible to perform the recovery work of the electrolytic solution without stopping the system, and hence there are less operation restrictions. It becomes possible to perform the recovery work of the electrolytic solution in rotation for all of plurality of banks 2 by switching each bank 2 to second bank 2b in turn by every predetermined amount of time by the rotation control by controller 60.

### REFERENCE SIGNS LIST

1 RF battery system
2 bank
2a first bank, 2b second bank
10 battery cell
11 membrane
12 positive cell, 13 negative cell
14 positive electrode, 15 negative electrode
20 electrolytic solution tank
22 positive electrolyte tank, 23 negative electrolyte tank
30 monitor cell
42, 43 supply pipe, 44, 45 return pipe
46, 47 pump
5 cell frame, 50 frame body, 51 bipolar plate, 55 seal member
100 cell stack, 101 end plate, 102 fastening member
6 battery control device
60 controller
7 power conversion device
80 counter
90 transformer facility, 91 power source, 92 load

## Claims

1. A redox flow battery system, comprising:
a plurality of banks;
a power conversion device provided in each of the plurality of banks; and
a controller that controls a state of charge of each of the plurality of banks by controlling the power conversion device, wherein:
each of the plurality of banks includes a battery cell that performs charging and discharging by a supply of an electrolytic solution;
the plurality of banks include:
a plurality of first banks controlled to be in a first state of charge; and
one or more second banks excluding the first banks; and
the controller controls a state of charge of the second bank to be a second state of charge different from the first state of charge.

2. The redox flow battery system according to claim 1, wherein the second state of charge is different from the first state of charge by ±2% or more.

3. The redox flow battery system according to claim 1 or 2, wherein:
the first state of charge has a range of the first state of charge defined by an upper limit and a lower limit;
the second state of charge has a range of the second state of charge defined by an upper limit and a lower limit; and
the range of the second state of charge is 30% or less of the range of the first state of charge.

4. The redox flow battery system according to any one of claims 1 to 3, wherein a rate of a number of the second banks to a total number of the plurality of banks is 30% or less.

5. The redox flow battery system according to any one of claims 1 to 4, wherein the controller controls each of the plurality of banks to include a time period set to the first state of charge and a time period set to the second state of charge.

6. The redox flow battery system according to claim 5, wherein a rate of an amount of time set to the second state of charge to a total amount of time of an amount of time set to the first state of charge and the amount of time set to the second state of charge is 30% or less.

7. The redox flow battery system according to any one of claims 1 to 6, wherein, when a particular bank out of the plurality of first banks is caused to transition from the first state of charge to the second state of charge, the controller performs charging or discharging from the particular bank to the second bank.

8. The redox flow battery system according to any one of claims 1 to 6, wherein:
a rate of a number of the second banks to a total number of the plurality of banks is represented by x; and
the controller discharges or charges a particular bank out of the plurality of first banks by a value that is 1/(1-x) times or more of an average value obtained by dividing a value of a discharging amount or a charging amount to the plurality of first banks by the total number of the plurality of banks when the particular bank is caused to transition from the first state of charge to the second state of charge.

9. The redox flow battery system according to any one of claims 1 to 6, wherein:
a rate of an amount of time set to the second state of charge to a total amount of time of an amount of time set to the first state of charge and the amount of time set to the second state of charge is represented by y; and
the controller discharges or charges a particular bank out of the plurality of first banks by a value that is 1/(1-y) times or more of an average value obtained by dividing a value of a discharging amount or a charging amount to the plurality of first banks by the total number of the plurality of banks when the particular bank is caused to transition from the first state of charge to the second state of charge.

10. The redox flow battery system according to any one of claims 1 to 9, wherein each of the plurality of banks has a counter that quantifies a generation amount of a side reaction product in the electrolytic solution.

11. The redox flow battery system according to claim 10, wherein the counter quantifies the generation amount of the side reaction product in the electrolytic solution as a function of each of a value of a state of charge, a temperature of the electrolytic solution, and an amount of time in each of the plurality of banks.
